# EUROPÄISCHE PATENTSCHRIFT

(11) **EP 2 615 302 B1**
(45) Veröffentlichungstag und Bekanntmachung des Hinweises auf die Patenterteilung: **02.09.2015**
(21) Anmeldenummer: 12000836.2
(22) Anmeldetag: 09.02.2012
(51) Int. Cl.: F03D 7/02, F03D 11/00

(54) **Verfahren zum Betreiben einer Windenergieanlage, bei dem auf Grundlage meteorologischer Daten eine Vereisungsgefahr ermittelt wird, und Windenergieanlage zur Ausführung des Verfahrens**
Method for operating a wind energy assembly, for which the risk of icing is determined on the basis of meteorological data and wind energy assembly for implementing the method
Procédé de fonctionnement d'une éolienne dans lequel un danger de givre est détecté en raison de données météorologiques, et éolienne destinée à la réalisation du procédé

(30) Priorität: 10.01.2012 EP 12000119
(43) Veröffentlichungstag der Anmeldung: 17.07.2013
(73) Patentinhaber: Nordex Energy GmbH, 22419 Hamburg (DE)
(72) Erfinder: Renschler, Oskar, 22941 Delingsdorf (DE); Stock, Melanie, 22083 Hamburg (DE)
(74) Vertreter: Hauck Patentanwaltspartnerschaft mbB

(56) Entgegenhaltungen:
- EP-A1- 2 026 160
- EP-A1- 2 108 829
- EP-B1- 0 914 276
- WO-A1-2005/020175
- WO-A1-2007/138450
- US-A- 3 434 347
- US-B1- 6 890 152

## Beschreibung

Die Erfindung betrifft ein Verfahren zum Betreiben einer Windenergieanlage, bei dem eine Oberflächentemperatur erfasst und eine Vereisungsgefahr einer Komponente einer Windenergieanlage ermittelt wird.

An einigen Standorten von Windenergieanlagen kommt es aufgrund hoher Luftfeuchtigkeit und Temperaturen um den Gefrierpunkt immer wieder zu einer Vereisung von Komponenten der Windenergieanlage, insbesondere der Rotorblätter. Eine solche Vereisung kann den Betrieb der Windenergieanlage beeinträchtigen, insbesondere die aerodynamische Leistungsfähigkeit der Rotorblätter mindern. Über entsprechende Ertragseinbußen hinaus können aerodynamische Unwuchten entstehen, die die Lebensdauer von Komponenten verringern können.

Somit kann durch eine effektive Enteisung die Lebensdauer und Effizienz einer Windenergieanlage an Standorten erhöht werden, an denen es zu einer Vereisung kommt. Insbesondere zur Enteisung von Rotorblättern können aktive und passive Enteisungssysteme eingesetzt werden. Aktive Enteisungssysteme weisen eine insbesondere elektrisch betriebene Heizeinrichtung auf. Eine solche Heizeinrichtung ist beispielsweise aus der Druckschrift WO 98/53200 A1 bekannt geworden.

Um aktive Enteisungssysteme zielgenau und ohne übermäßigen Energieverbrauch einsetzen zu können, ist es von entscheidender Bedeutung, eine beginnende Eisbildung oder eine Vereisungsgefahr rechtzeitig zu erkennen. Hierzu ist es aus der Druckschrift US 2011/0089692 A1 bekannt geworden, in der Umgebung einer Windenergieanlage die meteorologischen Daten Temperatur, relative Luftfeuchtigkeit und Sonneneinstrahlung zu messen und auf dieser Grundlage eine Vereisungswahrscheinlichkeit zu ermitteln. Bei dem bekannten Verfahren wird außerdem überwacht, ob die Windenergieanlage einen bei der jeweiligen Windgeschwindigkeit erwarteten Leistungswert erreicht. In Abhängigkeit von Leistungsabweichungen und der ermittelten Vereisungsgefahr kann die Windenergieanlage abgeschaltet werden.

Ein anderes Verfahren zur Erkennung von Eis auf den Rotorblättern einer Windenergieanlage ist aus der Druckschrift DE 10 2005 016 524 A1 bekannt geworden. Bei diesem bekannten Verfahren werden ebenfalls die Temperatur und die Luftfeuchtigkeit überwacht, zusätzlich Informationen über einen Niederschlag und die Niederschlagsart. Außerdem wird mit Hilfe von Dehnungsmessstreifen an den Rotorblättern festgestellt, ob ein Massenungleichgewicht zwischen den Rotorblättern vorliegt. Wird eine solche "Blattmassenanomalie" beobachtet und sind die überwachten meteorologischen Daten mit einer Eisbildung vereinbar, wird ein Signal ausgegeben, dass eine Vereisung der Rotorblätter vorliegt oder wahrscheinlich ist.

Druckschrift EP 2 108 829 A1 beschreibt eine Windenergieanlage, die zur Erkennung eines Anemometerfehlers eingerichtet ist. Hierzu wird eine Außenlufttemperatur T gemessen. Wird eine Abweichung zwischen einer mit dem Anemometer gemessenen Windgeschwindigkeit V und einem Windgeschwindigkeitschätzwert Va festgestellt, wird überprüft, ob die gemessene Außenlufttemperatur T einen bestimmten Grenzwert überschreitet. Ist dies nicht der Fall und ist die gemessene Außenlufttemperatur T niedrig, insbesondere unterhalb des Gefrierpunkts, kann auf eine mögliche Vereisung des Anemometers geschlossen werden.

Druckschrift EP 0 914 276 B1 beschreibt eine Enteisungsvorrichtung für ein Rotorblatt, das eingebaute Mikrowellengeneratoren zur Erwärmung des Rotorblatts aufweist. Die Druckschrift schlägt vor, die Oberflächentemperatur des Rotorblatts um einige Grad zu erhöhen, wenn für eine Vereisung kritische Bedingungen vorliegen.

Aus der Druckschrift WO 2007/138450 A1 ist ein Verfahren zur Erkennung eines Vereisungsrisikos an den Rotorblättern einer Windenergieanlage bekannt geworden. Bei diesem bekannten Verfahren sind an einer aerodynamischen Oberfläche des Rotorblatts ein Temperatursensor und Regensensor angeordnet. Der Regensensor stellt fest, ob Wasser auf der Oberfläche vorhanden ist. Ist dies der Fall und liegt die Temperatur unterhalb eines bestimmten Wertes, wird ein Signal ausgegeben, dass eine Vereisung wahrscheinlich ist.

Davon ausgehend ist es die Aufgabe der Erfindung, ein Verfahren zum Betreiben einer Windenergieanlage zur Verfügung zu stellen, mit dem eine Vereisungsgefahr einfach und genau ermittelt werden kann.

Diese Aufgabe wird gelöst durch das Verfahren zum Betreiben einer Windenergieanlage mit den im Anspruch 1 angegebenen Schritten. Vorteilhafte Ausgestaltungen des Verfahrens sind in den sich anschließenden Unteransprüchen angegeben.

Das Verfahren weist die folgenden Schritte auf:
- Erfassen einer Oberflächentemperatur einer Komponente der Windenergieanlage und
- Ermitteln einer Vereisungsgefahr der Komponente der Windenergieanlage, wobei
- eine Frost- oder Taupunkttemperatur der Umgebungsluft ermittelt wird und
- beim Ermitteln der Vereisungsgefahr eine Differenz zwischen der Oberflächentemperatur und der Frost- oder Taupunkttemperatur ausgewertet wird.

Das Erfassen der Oberflächentemperatur kann mit einem Temperatursensor erfolgen, der unmittelbar an der Oberfläche angeordnet ist. Er kann mit der Oberfläche in thermischem Kontakt stehen. Ein geringer Abstand zwischen Oberfläche und Temperatursensor ist ebenfalls möglich, solange die mit dem Temperatursensor erfasste Temperatur im Wesentlichen der lokalen Oberflächentemperatur entspricht. Die Oberfläche kann eine aerodynamische Oberfläche sein. Bei der Komponente der Windenergienanlage kann es sich zum Beispiel um ein Rotorblatt handeln.

Der Temperatursensor wird bevorzugt in einem Bereich der Oberfläche der Komponente angeordnet, der für eine Vereisung besonders anfällig ist. Im Falle eines Rotorblatts kann dies zum Beispiel die Profilnasenkante oder ein Abschnitt der Saugseite des Rotorblatts sein. Die Erfindung basiert auf dem Gedanken, dass die Oberflächentemperatur der Komponente niedriger sein kann als die Temperatur der Umgebungsluft. Dieser Effekt tritt insbesondere an der Oberfläche von Rotorblättern auf.

Die Vereisungsgefahr ist ein Maß dafür, ob mit einer Vereisung der Komponente der Windenergieanlage zu rechnen ist. Es kann sich bei der Vereisungsgefahr um eine einfache ja/nein-Information handeln oder um eine quantitative Größe, die einer Wahrscheinlichkeit für eine Vereisung entspricht. Im letztgenannten Fall können bei Ermittlung einer Vereisungsgefahr Maßnahmen, beispielsweise das Inbetriebnehmen einer Heizung, bei Überschreiten eines bestimmten Wahrscheinlichkeitswerts getroffen werden.

Die Vereisungsgefahr ist stets auf die Komponente der Windenergieanlage bezogen, deren Oberflächentemperatur erfasst wird. Es versteht sich, dass auch mehrere Temperatursensoren an unterschiedlichen Abschnitten einer Oberfläche oder an mehreren Oberflächen einer oder mehrerer Komponenten der Windenergieanlage angeordnet werde können. In diesem Fall kann eine Vereisungsgefahr für jeden Ort, an dem die Oberflächentemperatur erfasst wird, ermittelt werden.

Außerdem wird bei der Erfindung eine Frostpunkttemperatur oder eine Taupunkttemperatur der Umgebungsluft ermittelt. Diese Temperaturen sind ein Maß dafür, wann die relative Feuchte der Umgebungsluft mit gasförmigem Wasser gesättigt ist. Bei Abkühlung der Umgebungsluft unter die Frost- oder Taupunkttemperatur kommt es zur Kondensation oder Resublimation, also Niederschlag der Feuchtigkeit als Wasser oder Eis. Ein Beispiel soll diese Zusammenhänge veranschaulichen: Bei einer Temperatur von 20 °C kann Luft ungefähr 9,4 g Wasser pro Kubikmeter aufnehmen. Sind bei bestimmten Wetterbedingungen bei dieser Temperatur nur 4,7 g Wasser in einem Kubikmeter Luft enthalten, beträgt die relative Feuchte somit 50 %. Wird diese Luft auf eine Temperatur von etwa -0,5 °C abgekühlt, erreicht die relative Feuchte ihr Maximum von 100 %, weil ein Kubikmeter Luft bei dieser Temperatur nur noch ungefähr 4,7 g Wasser aufnehmen kann. Bei Temperaturen von weniger als etwa -0,5 °C kommt es daher zu einem Niederschlag der Feuchtigkeit.

In Abhängigkeit von der Temperatur können zwei Vorgänge unterschieden werden: Bei Temperaturen oberhalb des Gefrierpunkts von Wasser kommt es zu einem Niederschlag in Form von Wassertröpfchen. Dieser Vorgang wird als Kondensation bezeichnet. Die zugehörige, den Kondensationspunkt kennzeichnende Temperatur wird als Taupunkttemperatur bezeichnet.

Bei Temperaturen unterhalb des Gefrierpunkts von Wasser kommt es zu einem Niederschlag in Form von Eiskristallen. Dieser Vorgang wird als Resublimation bezeichnet, weil der umgekehrte Prozess, nämlich ein unmittelbarer Wechsel vom festen in den gasförmigen Aggregatzustand, als Sublimation bezeichnet wird. Die zugehörige, den Resublimationspunkt kennzeichnende Temperatur wird als Frostpunkttemperatur bezeichnet.

Taupunkttemperatur und Frostpunkttemperatur unterscheiden sich voneinander, weil die Dampfdrücke von Wasser über festem Wasser (Eis) anders sind als über flüssigem Wasser.

Bei der Erfindung wird eine Differenz zwischen der erfassten Oberflächentemperatur und der für die Umgebungsluft ermittelten Frost- oder Taupunkttemperatur ausgewertet. Es wird daher bei der Ermittlung der Vereisungsgefahr berücksichtigt, ob die Umgebungsluft so beschaffen ist, dass bei einer Abkühlung auf die erfasste Oberflächentemperatur - was beim Kontakt der Umgebungsluft mit der Oberfläche mehr oder weniger vollständig geschieht - mit einem Niederschlag des in der Umgebungsluft enthaltenen Wassers gerechnet werden muss.

Im Vergleich zu dem eingangs geschilderten, bekannten Vorgehen mit einem Regensensor wird also nicht abgewartet, ob es tatsächlich zu einer Tröpfchenbildung und damit einem Ansprechen des Regensensors kommt, sondern es wird unabhängig davon überprüft, ob Bedingungen für einen Feuchtigkeitsniederschlag an der Oberfläche vorliegen. Dies ermöglicht eine genauere Beurteilung der Vereisungsgefahr.

In einer Ausgestaltung wird eine Vereisungsgefahr nur dann erkannt, wenn die Oberflächentemperatur um weniger als einen vorgegebenen Betrag oberhalb der Frost- oder Taupunkttemperatur liegt. Der vorgegebene Betrag kann beispielsweise im Bereich von 1 ° bis 4 ° liegen. Es ist eine für eine Vereisung notwenige, jedoch nicht hinreichende Bedingung, dass die Oberflächentemperatur weniger als einen vorgegebenen Betrag oberhalb der Frost- oder Taupunkttemperatur liegt. Bei Oberflächentemperaturen weit oberhalb der Frost- oder Taupunkttemperatur, beispielsweise mehr als 4 ° darüber, kann ausgeschlossen werden, dass sich Feuchtigkeit aus der Luft an der Oberfläche niederschlägt. An der Oberfläche bereits vorhandene Feuchtigkeit würde in der Regel ebenfalls nicht zu einer nachhaltigen Vereisung führen, sondern durch Verdunstung oder Sublimation von der Umgebungsluft aufgenommen werden. Das Einhalten eines "Abstands" in Höhe des vorgegebenen Betrags zwischen Oberflächentemperatur und Frost- oder Taupunkttemperatur ist eine Vorsichtsmaßnahme, die Messfehlern, schnellen Änderungen der Oberflächentemperatur und/oder der Frost- oder Taupunkttemperatur Rechnung tragen kann.

In einer Ausgestaltung wird eine Vereisungsgefahr nur dann erkannt, wenn die Oberflächentemperatur unterhalb der Frost- oder Taupunkttemperatur liegt. Auch hierbei handelt es sich um eine notwenige, jedoch nicht hinreichende Bedingung für eine Vereisung. Liegt die Oberflächentemperatur unterhalb der Frost- oder Taupunkttemperatur, ist mit hoher Wahrscheinlichkeit mit einem Niederschlag der Feuchtigkeit an der Oberfläche zu rechnen.

In einer Ausgestaltung wird eine Vereisungsgefahr nur dann erkannt, wenn die Oberflächentemperatur unterhalb einer vorgegebenen Mindesttemperatur liegt. Hierbei handelt es sich um eine weitere notwendige, jedoch nicht hinreichende Bedingung für eine Vereisung. Die vorgegebene Mindesttemperatur kann zum Beispiel im Bereich von 0 °C bis 4 °C liegen. Bei höheren Oberflächentemperaturen wird sich in der Regel selbst bei einem Niederschlag von Feuchtigkeit an der Oberfläche kein Eis bilden.

In einer Ausgestaltung wird bei Oberflächentemperaturen unterhalb eines vorgegebenen Grenzwerts die Differenz zwischen der Oberflächentemperatur und der Frostpunkttemperatur ausgewertet. Wegen der unterschiedlichen Dampfdrucke über Wasser und über Eis liegt die Frostpunkttemperatur in der Regel etwas höher als die Taupunkttemperatur. Ist unterhalb einer bestimmten Oberflächentemperatur, beispielsweise entsprechend dem Gefrierpunkt von Wasser, ein Niederschlag durch Resublimation zu erwarten, ist es daher sicherer und genauer, bei der Ermittlung der Vereisungsgefahr auf die Frostpunkttemperatur statt auf die Taupunkttemperatur abzustellen.

In einer Ausgestaltung werden zum Ermitteln der Frost- oder Taupunkttemperatur die Temperatur der Umgebungsluft, die relative Feuchte der Umgebungsluft und/oder der Druck der Umgebungsluft erfasst. Auf Grundlage der genannten Messwerte kann die Frostpunkttemperatur bzw. die Taupunkttemperatur einfach berechnet werden.

In einer Ausgestaltung erfolgt das Erfassen der Temperatur, der relativen Feuchte und/oder des Drucks der Umgebungsluft in einem Abstand von der Komponente der Windenergieanlage. Bei der Frost- und Taupunkttemperatur der Umgebungsluft handelt es sich um Größen, die weitgehend ortsunabhängig sind. So unterscheidet sich der Feuchtigkeitsgehalt der Umgebungsluft im Bereich einer Gondel der Windenergieanlage in der Regel nur geringfügig vom Feuchtigkeitsgehalt der Umgebungsluft am Boden oder im Bereich eines Rotorblatts. Gegebenenfalls bestehende Unterschiede können häufig auf den Luftdruck in der betreffenden Höhe zurückgeführt und bei der Ermittlung der Frost- oder Taupunkttemperatur berücksichtigt werden. Daher kann die Erfassung der Messwerte, auf deren Grundlage die Frost- oder Taupunkttemperatur ermittelt wird, an einem beliebigen Ort erfolgen, insbesondere in einem Abstand von der Komponente, für die die Vereisungsgefahr ermittelt werden soll. Die Anordnung der entsprechenden Messgeräte kann daher nach praktischen Erwägungen erfolgen, etwa in einer Wetterstation auf dem Boden, am Rotor oder an bzw. auf der Gondel. Alle zur Ermittlung der Frost- oder Taupunkttemperatur herangezogenen Sensoren können am selben Ort angeordnet sein.

In einer Ausgestaltung wird bei Erkennung einer Vereisungsgefahr eine Heizeinrichtung für die Komponente der Windenergieanlage aktiviert. Dabei kann es sich beispielsweise um eine Rotorblattheizung handeln. Die Heizeinrichtung kann insbesondere elektrisch betrieben sein.

In einer Ausgestaltung wird bei Erkennung einer Vereisungsgefahr die Windenergieanlage abgeschaltet. Durch diese einfache Maßnahme kommt es zwar zu Ertragseinbußen, dennoch kann eine Schädigung der Anlage durch Vereisung verhindert werden. Diese Lösung bietet sich insbesondere für Standorte an, an denen es nur sehr selten zu einer Vereisungsgefahr kommt.

Die oben angegebene Aufgabe wird ebenfalls gelöst durch die Windenergieanlage mit den Merkmalen des Anspruchs 10. Vorteilhafte Ausgestaltungen sind in den sich anschließenden Unteransprüchen angegeben.

Die Windenergieanlage hat
- einen Sensor zum Erfassen einer Oberflächentemperatur einer Komponente der Windenergieanlage,
- eine Steuerung, die mit dem Sensor zum Erfassen der Oberflächentemperatur der Komponente verbunden und zur Ermittlung einer Vereisungsgefahr der Komponente der Windenergieanlage ausgebildet ist, und
- eine mit der Steuerung verbundene Messanordnung zur Ermittlung einer Frost- oder Taupunkttemperatur der Umgebungsluft, wobei
- die Steuerung dazu ausgebildet ist, bei der Ermittlung der Vereisungsgefahr eine Differenz zwischen einer erfassten Oberflächentemperatur und einer ermittelten Frost- oder Taupunkttemperatur auszuwerten.

Zur Erläuterung der Merkmale und Vorteile der Windenergieanlage wird auf die vorstehenden Erläuterungen des erfindungsgemäßen Verfahrens verwiesen, die entsprechend gelten. Die Windenergieanlage ist insbesondere zur Ausführung des erfindungsgemäßen Verfahrens vorgesehen. Durch die Auswertung der Differenz zwischen einer erfassten Oberflächentemperatur und einer ermittelten Frost- oder Taupunkttemperatur bei der Ermittlung der Vereisungsgefahr kann die Genauigkeit bei der Ermittlung der Vereisungsgefahr auf einfache Weise verbessert werden.

In einer Ausgestaltung weist die Messanordnung zur Ermittlung der Frost- oder Taupunkttemperatur einen Temperatursensor, der die Temperatur der Umgebungsluft erfasst, einen Feuchtesensor, der die relative Feuchte der Umgebungsluft erfasst, und/oder einen Drucksensor, der den Druck der Umgebungsluft erfasst, auf. Auf Grundlage der entsprechenden Messwerte kann die Frost- oder Taupunkttemperatur berechnet werden. Hierzu wird auf die vorstehenden Erläuterungen zu den korrespondierenden Verfahrensmerkmalen verwiesen.

In einer Ausgestaltung sind der Temperatursensor, der Feuchtesensor und/oder der Drucksensor in einem Abstand von der Komponente der Windenergieanlage angeordnet. Hierzu wird auf die vorstehenden Erläuterungen zu den korrespondierenden Verfahrensmerkmalen verwiesen.

In einer Ausgestaltung ist die Messanordnung zur Ermittlung der Frost- oder Taupunkttemperatur ein Kombimesswertgeber, der die Temperatur, die relative Feuchte und den Druck der Umgebungsluft erfasst. Derartige Kombimesswertgeber sind aus der Meteorologie bekannt und können die zur Ermittlung der Frost- oder Taupunkttemperatur erforderlichen Messdaten einfach und zuverlässig zur Verfügung stellen.

In einer Ausgestaltung weist die Windenergieanlage eine Heizeinrichtung auf und die Steuerung ist dazu ausgebildet, bei Erkennung einer Vereisungsgefahr die Heizeinrichtung zu aktivieren. Hierzu wird auf die vorstehenden Erläuterungen zu den korrespondierenden Verfahrensmerkmalen verwiesen. Die Heizeinrichtung kann beispielsweise an einer Oberfläche eines Rotorblatts angeordnet sein.

Nachfolgend wird die Erfindung anhand eines in einer Figur dargestellten Ausführungsbeispiels näher erläutert.

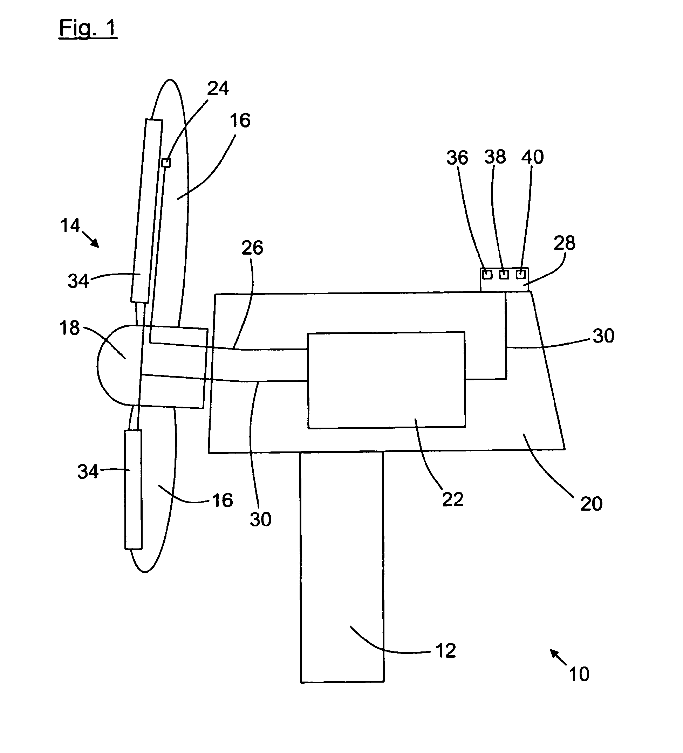

Die einzige Figur zeigt schematisch vereinfacht eine erfindungsgemäße Windenergieanlage 10, die einen nur ausschnittsweise dargestellten Turm 12, einen Rotor 14 mit im Wesentlichen horizontaler Achse und drei Rotorblättern 16 sowie einer Rotornabe 18 aufweist. Außerdem hat die Windenergieanlage 10 eine Gondel 20, in der eine Steuerung 22 angeordnet ist. Die Steuerung 22 kann ein Teil der zentralen Betriebsführung sein.

Die Windenergieanlage 10 hat einen Sensor 24 zur Erfassung einer Oberflächentemperatur einer Komponente der Windenergieanlage 10. Im gezeigten Ausführungsbeispiel erfasst der Sensor 24 die Oberflächentemperatur an einer aerodynamischen Oberfläche an der Saugseite eines Rotorblatts 16. Der Sensor 24 steht in thermischem Kontakt mit der Oberfläche des Rotorblatts 16. Über eine elektrische Leitung 26, die eine Schleifringverbindung aufweisen kann, ist der Sensor 24 mit der Steuerung 22 verbunden.

Außerdem weist die Windenergieanlage einen Kombimesswertgeber 28 auf. Dieser ist auf der Gondel 20 angeordnet und über eine elektrische Leitung 30 mit der Steuerung 22 verbunden. Der Kombimesswertgeber 28 erfasst die Temperatur, die relative Feuchte und den Druck der Umgebungsluft. Zu diesem Zweck weist der Kombimesswertgeber einen Temperatursensor 36, einen Feuchtesensor 38 und einen Drucksensor 40 auf. Der Kombimesswertgeber 28 stellt die entsprechenden Messwerte der Steuerung 22 zur Verfügung. Die Steuerung 22 ermittelt auf Grundlage dieser Messwerte die Frost- oder Taupunkttemperatur der Umgebungsluft. Alternativ kann dies auch innerhalb der Messanordnung bzw. des Kombimesswertgebers geschehen.

Zur Ermittlung einer Vereisungsgefahr an den Rotorblättern wertet die Steuerung 22 dann eine Differenz zwischen der mit dem Sensor 24 an dem Rotorblatt 16 erfassten Oberflächentemperatur und der mit dem Kombimesswertgeber 28 ermittelten Frost- oder Taupunkttemperatur aus.

Über eine elektrische Leitung 32 ist die Steuerung 22 mit an den Rotorblättern 16 angeordneten Heizelementen 34 verbunden, welche bei bestehender Vereisungsgefahr aktiviert werden.

### Liste der verwendeten Bezugszeichen

- 10: Windenergieanlage
- 12: Turm
- 14: Rotor
- 16: Rotorblatt
- 18: Rotornabe
- 20: Gondel
- 22: Steuerung
- 24: Sensor zur Erfassung der Oberflächentemperatur
- 26: Leitung
- 28: Kombimesswertgeber
- 30: elektrische Leitung
- 32: elektrische Leitung
- 34: Heizeinrichtung
- 36: Temperatursensor
- 38: Feuchtesensor
- 40: Drucksensor

## Patentansprüche

1. Verfahren zum Betreiben einer Windenenergieanlage (10) mit den Schritten:
• Erfassen einer Oberflächentemperatur einer Komponente der Windenergieanlage (10) und
• Ermitteln einer Vereisungsgefahr der Komponente der Windenergieanlage (10), **dadurch gekennzeichnet, dass**
• eine Frost- oder Taupunkttemperatur der Umgebungsluft ermittelt wird und
• beim Ermitteln der Vereisungsgefahr eine Differenz zwischen der Oberflächentemperatur und der Frost- oder Taupunkttemperatur ausgewertet wird.

2. Verfahren nach Anspruch 1, **dadurch gekennzeichnet, dass** eine Vereisungsgefahr nur dann erkannt wird, wenn die Oberflächentemperatur um weniger als einen vorgegebenen Betrag oberhalb der Frost- oder Taupunkttemperatur liegt

3. Verfahren nach Anspruch 1 oder 2, **dadurch gekennzeichnet, dass** eine Vereisungsgefahr nur dann erkannt wird, wenn die Oberflächentemperatur unterhalb der Frost- oder Taupunkttemperatur liegt.

4. Verfahren nach einem der Ansprüche 1 bis 3, **dadurch gekennzeichnet, dass** eine Vereisungsgefahr nur dann erkannt wird, wenn die Oberflächentemperatur unterhalb einer vorgegebenen Mindesttemperatur liegt.

5. Verfahren nach einem der Ansprüche 1 bis 4, **dadurch gekennzeichnet, dass** bei Oberflächentemperaturen unterhalb eines vorgegebenen Grenzwerts die Differenz zwischen der Oberflächentemperatur und der Frostpunkttemperatur ausgewertet wird.

6. Verfahren nach einem der Ansprüche 1 bis 5, **dadurch gekennzeichnet, dass** zum Ermitteln der Frost- oder Taupunkttemperatur die Temperatur der Umgebungsluft, die relative Feuchte der Umgebungsluft und/oder der Druck der Umgebungsluft erfasst werden.

7. Verfahren nach Anspruch 6, **dadurch gekennzeichnet, dass** das Erfassen der Temperatur, der relativen Feuchte und/oder des Drucks der Umgebungsluft in einem Abstand von der Komponente der Windenergieanlage erfolgt.

8. Verfahren nach einem der Ansprüche 1 bis 7, **dadurch gekennzeichnet, dass** bei Erkennung einer Vereisungsgefahr eine Heizeinrichtung (34) für die Komponente der Windenergieanlage (10) aktiviert wird.

9. Verfahren nach einem der Ansprüche 1 bis 8, **dadurch gekennzeichnet, dass** bei Erkennung einer Vereisungsgefahr die Windenergieanlage (10) abgeschaltet wird.

10. Windenergieanlage (10) mit
• einem Sensor (24) zum Erfassen einer Oberflächentemperatur einer Komponente der Windenergieanlage (10) und
• einer Steuerung (22), die mit dem Sensor (24) zum Erfassen der Oberflächentemperatur der Komponente verbunden und zur Ermittlung einer Vereisungsgefahr der Komponente der Windenergieanlage (10) ausgebildet ist, **gekennzeichnet durch**
• eine mit der Steuerung (22) verbundene Messanordnung zur Ermittlung einer Frost- oder Taupunkttemperatur der Umgebungsluft und **dadurch**, dass
• die Steuerung (22) dazu ausgebildet ist, bei der Ermittlung der Vereisungsgefahr eine Differenz zwischen einer erfassten Oberflächentemperatur und einer ermittelten Frost- oder Taupunkttemperatur auszuwerten.

11. Windenergieanlage (10) nach Anspruch 10, **dadurch gekennzeichnet, dass** die Messanordnung zur Ermittlung der Frost- oder Taupunkttemperatur einen Temperatursensor (36), der die Temperatur der Umgebungsluft erfasst, einen Feuchtesensor (38), der die relative Feuchte der Umgebungsluft erfasst, und/oder einen Drucksensor (40), der den Druck der Umgebungsluft erfasst, aufweist.

12. Windenergieanlage (10) nach Anspruch 11, **dadurch gekennzeichnet, dass** der Temperatursensor (36), der Feuchtesensor (38) und/oder der Drucksensor (40) in einem Abstand von der Komponente der Windenergieanlage angeordnet sind.

13. Windenergieanlage (10) nach einem der Ansprüche 10 bis 12, **dadurch gekennzeichnet, dass** die Messanordnung zur Ermittlung der Frost- oder Taupunkttemperatur ein Kombimesswertgeber (28) ist, der die Temperatur, die relative Feuchte und den Druck der Umgebungsluft erfasst.

14. Windenergieanlage nach einem der Ansprüche 10 bis 13, **dadurch gekennzeichnet, dass** die Windenergieanlage (10) eine Heizeinrichtung (34) aufweist und die Steuerung (22) dazu ausgebildet ist, bei Erkennung einer Vereisungsgefahr die Heizeinrichtung (34) zu aktivieren.

## Claims

1. A method for operating a wind turbine (10), having the steps of:
• detecting a surface temperature of a component of the wind turbine (10) and
• determining a risk of icing of the component of the wind turbine (10), **characterized in that**
• a frost or a dew point temperature of the ambient air is determined and
• a difference between the surface temperature and the frost or dew point temperature is evaluated during the determination of the risk of icing.

2. The method according to claim 1, **characterized in that** a risk of icing is only recognized when the surface temperature is less than a predetermined amount above the frost or dew point temperature.

3. The method according to claim 1 or 2, **characterized in that** a risk of icing is only recognized when the surface temperature is below the frost or dew point temperature.

4. The method according to one of the claims 1 to 3, **characterized in that** a risk of icing is only recognized when the surface temperature is below a predetermined minimum temperature.

5. The method according to one of the claims 1 to 4, **characterized in that** the difference between the surface temperature and the frost point temperature is evaluated when surface temperatures are below a predetermined limit value.

6. The method according to one of the claims 1 to 5, **characterized in that** the temperature of the ambient air, the relative humidity of the ambient air and/or the pressure of the ambient air are detected for determining the dew point temperature.

7. The method according to claim 6, **characterized in that** the detecting of the temperature, the relative humidity and/or the pressure of the ambient air is performed at a distance from the component of the wind turbine.

8. The method according to one of the claims 1 to 7, **characterized in that** a heating unit (34) for the component of the wind turbine (10) is activated when a risk of icing is recognized.

9. The method according to one of the claims 1 to 8, **characterized in that** the wind turbine (10) is shut off when a risk of icing is detected.

10. A wind turbine (10), having
• a sensor (24) for detecting a surface temperature of a component of the wind turbine (10) and
• a controller (22) which is connected to the sensor (24) for detecting the surface temperature of the component and configured to determine a risk of icing of the component of the wind turbine (10), **characterized by**
• a measuring arrangement for determining a frost or dew point temperature of the ambient air, the measuring arrangement being connected to the controller (22), and **characterized in that**
• the controller (22) is configured to evaluate a difference between a detected surface temperature and a determined frost or dew point temperature when determining the risk of icing.

11. The wind turbine (10) according to claim 10, **characterized in that** the measurement arrangement for determining the frost or dew point temperature has a temperature sensor (36) which detects the temperature of the ambient air, a humidity sensor (38) which detects the relative humidity of the ambient air, and/or a pressure sensor (40) which detects the pressure of the ambient air.

12. The wind turbine (10) according to claim 11, **characterized in that** the temperature sensor (36), the humidity sensor (38) and/or the pressure sensor (40) are arranged at a distance from the component of the wind turbine.

13. The wind turbine (10) according to one of the claims 10 to 12, **characterized in that** the measurement arrangement for determining the frost or dew point temperature is a combined transducer (28) which detects the temperature, the relative humidity and the pressure of the ambient air.

14. The wind turbine according to one of the claims 10 to 13, **characterized in that** the wind turbine (10) has a heating unit (34) and the controller (22) is configured to activate the heating unit (34) when a risk of icing is recognized.

## Revendications

1. Procédé de fonctionnement d'une éolienne (10) avec les étapes:
• détection d'une température superficielle d'un composant de l'éolienne (10), et
• détermination d'un danger de givre pour le composant de l'éolienne (10), **caractérisé en ce que**
• une température de gel ou de rosée de l'air ambiant est déterminée, et
• dans la détermination du danger de givre, une différence entre la température superficielle et la température de gel ou de rosée est évaluée.

2. Procédé selon la revendication 1, **caractérisé en ce que** un danger de givre est reconnu seulement dès lors que la température superficielle est au-dessus de la température de gel ou de rosée pour moins qu'une valeur prescrite.

3. Procédé selon la revendication 1 ou 2, **caractérisé en ce que** un danger de givre est reconnu seulement dès lors que la température superficielle est au-dessous de la température de gel ou de rosée.

4. Procédé selon l'une quelconque des revendications 1 à 3, **caractérisé en ce que** un danger de givre est reconnu seulement dès lors que la température superficielle est au-dessous d'une température minimale prescrite.

5. Procédé selon l'une quelconque des revendications 1 à 4, **caractérisé en ce que** chez températures superficielles au-dessous d'une valeur limite prescrite, la différence entre la température superficielle et la température de gel est évaluée.

6. Procédé selon l'une quelconque des revendications 1 à 5, **caractérisé en ce que** pour déterminer la température de gel ou de rosée, la température de l'air ambiant, l'humidité relative de l'air ambiant et/ou la pression de l'air ambiant sont détectées.

7. Procédé selon la revendication 6, **caractérisé en ce que** la détection de la température, de l'humidité relative et/ou de la pression de l'air ambiant prend place dans une distance du composant de l'éolienne.

8. Procédé selon l'une quelconque des revendications 1 à 7, **caractérisé en ce que** un dispositif de chauffage (34) pour le composant de l'éolienne (10) sera activé quand un danger de givre est reconnu.

9. Procédé selon l'une quelconque des revendications 1 à 8, **caractérisé en ce que** l'éolienne (10) sera arrêtée quand un danger de givre est reconnu.

10. Éolienne (10) avec
• un capteur (24) pour la détection d'une température superficielle d'un composant de l'éolienne (10) et
• une commande (22), qui est reliée au capteur (24) pour la détection de la température superficielle du composant et agencée pour la détermination d'un danger de givre du composant de l'éolienne, **caractérisée par**
• un dispositif de mesure relié à la commande (22), pour la détermination d'une température de gel ou de rosée de l'air ambiant, et en ce que
• dans la détermination du danger de givre, la commande (22) est agencée à évaluer une différence entre une température superficielle détectée et une température de gel ou de rosée déterminée.

11. Éolienne (10) selon la revendication 10, **caractérisée en ce que** le dispositif de mesure pour la détermination de la température de gel ou de rosée comporte un capteur de température (36) qui détecte la température de l'air ambiant, un capteur d'humidité (38) qui détecte l'humidité relative de l'air ambiant, et/ou un capteur de pression (40) qui détecte la pression de l'air ambiant.

12. Éolienne (10) selon la revendication 11, **caractérisée en ce que** le capteur de température (36), le capteur d'humidité (38) et/ou le capteur de pression (40) sont disposés dans une distance du composant de l'éolienne

13. Éolienne (10) selon l'une quelconque des revendications 10 à 12, **caractérisée en ce que** le dispositif de mesure pour la détermination de la température de gel ou de rosée est un transmetteur combiné (28), qui détecte la température, l'humidité relative et la pression de l'air ambiant.

14. Éolienne selon l'une quelconque des revendications 10 à 13, **caractérisée en ce que** l'éolienne (10) comporte un dispositif de chauffage (34) et la commande (22) est agencée pour activer le dispositif de chauffage (34) quand un danger de givre est reconnu.
